Europäisches Patentamt

European Patent Office

Office européen des brevets

(11) Publication number: **0 527 573 A2**

# (12) EUROPEAN PATENT APPLICATION

(21) Application number: **92306900.9**

(22) Date of filing: **29.07.92**

(51) Int. Cl.5: **H04N 1/10**

(30) Priority: **12.08.91 JP 201662/91**

(43) Date of publication of application:
**17.02.93 Bulletin 93/07**

(84) Designated Contracting States:
**DE GB**

(71) Applicant: **BROTHER KOGYO KABUSHIKI KAISHA**
**15-1, Naeshiro-cho, Mizuho-ku**
**Nagoya-shi, Aichi-ken(JP)**

(72) Inventor: **Nishikawa, Hiroshi, c/o Brother Kogyo K. K.**
**15-1, Naeshiro-cho, Mizuho-ku**
**Nagoya-shi, Aichi-ken(JP)**

(74) Representative: **Senior, Alan Murray et al**
**J.A. KEMP & CO., 14 South Square Gray's Inn**
**London WC1R 5LX (GB)**

(54) **Portable copying device.**

(57) A device which can easily copy an image within a limited area of an original comprises a reading window defined in a lower projecting portion of a housing which is L-shaped in side elevation, providing a visual recognition member. The visual recognition member allows the user to visually recognize an image to be copied over which the housing is placed. When a start button is depressed, a sensor is reciprocally moved by a wire. An image read by the sensor is printed on a tape by a print head. The printed tape is fed by a tape feed roller operatively coupled by a gear train to a motor which also drives the wire through a gear train.

FIG. 1B

FIG.1A

The present invention relates generally to a handy-type copying device, and more particularly to a handy-type copying device for copying one or more character strings without breaking them.

There are many cases when it is desirable to copy items on original material to produce, for example, a label for affixing to a copied material. For example, when a backup diskette is created from an original software diskette for use in a two-disk drive system of a personal computer, the user may want to affix a label of the software to the backup diskette. If the backup diskette has a label indicating the title of the software, diskette number or the like, it is convenient for the user to identify the diskette.

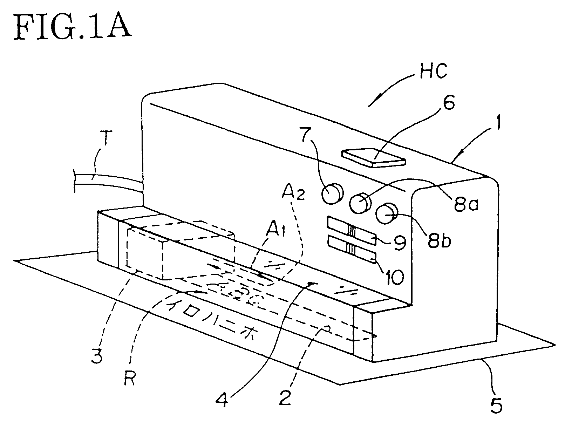

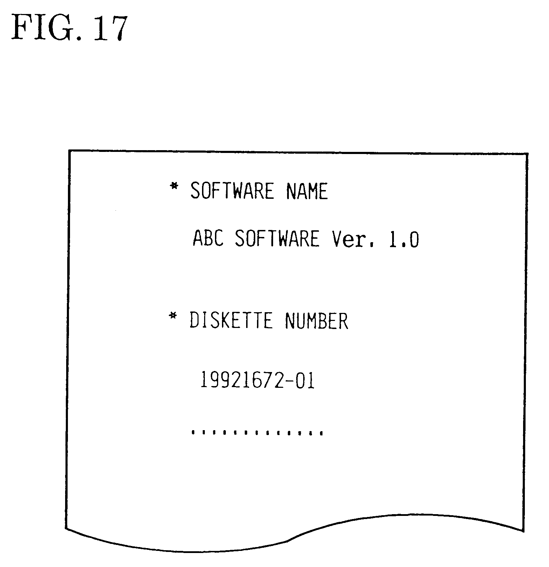

As shown in Fig. 17 of the accompanying drawings, it is common for the original material to carry a printed list of various items. To copy the printed list with a hand-held copying machine having a roll of thermal paper, the reader of the hand-held copying machine may be held against an area to be copied as shown in FIG. 1A, and moved to a desired position thus copying the titles and other information. Another way of copying the printed list is to use a character tape producing machine which prints desired characters or the like on an adhesive tape. The characters and numerals such as "ABC SOFTWARE Ver. 1.0" are entered through an input device such as a keyboard or the like, and printed on the adhesive tape. According to still another method, the object is read by an image reader, and the read data is input to a personal computer set. The desired read data is printed on a print paper by a printer, and the printed paper is cut into a tape.

However, the aforesaid conventional devices have suffered the following drawbacks. In the case of using a hand-held copying machine, since the copying machine is manually moved by the user while copying the desired object, it is difficult to move the copying machine linearly at constant speed. The copied character string or strings tend to be undulated or interrupted. In the case of a character tape producing machine, it is inconvenient to print characters other than alphanumerals, such as in the case of printing Chinese characters, since the user has to search a target character among a plurality of options. Besides, the character tape producing machine is expensive because it is made up of a number of electronic components. In the case of a personal computer set, the use of the image reader, the cutting of the printed paper into a long narrow tape, etc. result in a procedures that are tedious and time-consuming.

According to a previous proposed handy-type copying device, reading means having a plurality of self-acting reading elements aligned in a longitudinal direction reads an object to be copied (e.g., a character string) when a manuscript displaying window (an elongated rectangular-shape reading window) is held against the object to be copied. The information of the object to be copied which is read by the reading means is printed on, for example, a tape.

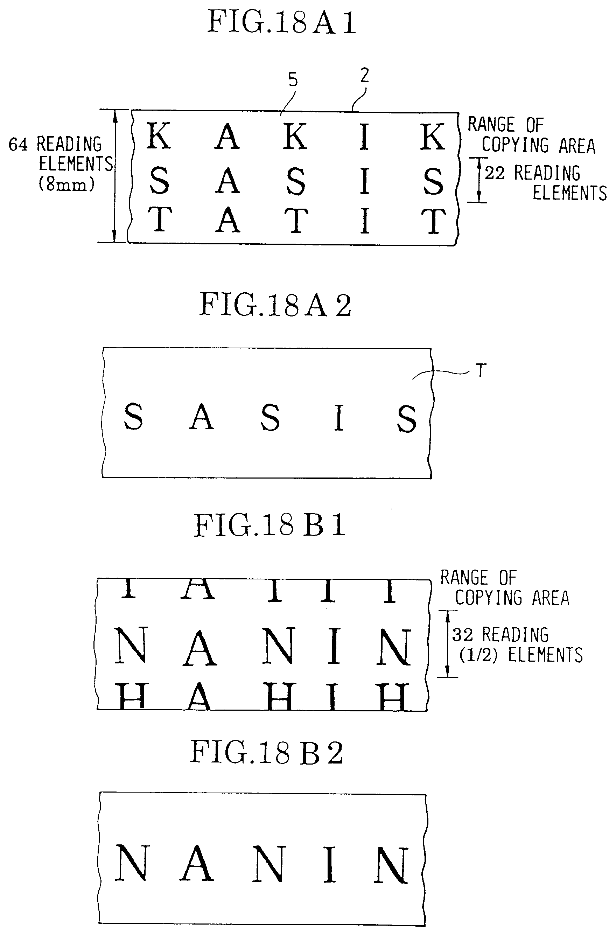

It will now be explained with reference to FIG.18 the copying of an object read by the handy-type copying device.

An explanation is provided of when the handy-type copying device reads only a center portion "SASIS" on a printed document 5 which is an object to be copied (see FIG. 18A1), and prints the "SASIS" on a center of an output tape T (see FIG. 18A2). In this case, since sixty-four reading elements are aligned in a longitudinal direction, a reading width setting button (not shown) may be adjusted such that a range of copying area is set to be printed by twenty-two reading elements (about 1/3). After this, the handy-type copying device may read the "SASIS" in order to print it.

However, since the positional relationship between a reading sensor and a thermal head (printing means) is predetermined in the above-mentioned handy-type copying device, an object to be copied needs to be read at the center of the reading sensor in order to be printed on the center of the tape T. Therefore, as shown in FIG.18A1, if there are undesired characters ("KAKIK","TACHI") on top and bottom sides of the object to be copied, it is difficult for a user to set a center portion of the window means at the desired reading position ("SASIS").

Moreover, as shown in FIG. 18B1 and FIG. 18B2, there is a similar problem to the above-mentioned problem when the range of copying area is set to be printed by thirty-two reading elements (about 1/2) in order to print larger characters "NANIN".

As described above wherein "SASIS" is printed, it is possible that there are objects on top and bottom sides of the object to be copied. However, if the handy-type copying device can print an object to be copied at an arbitrary tape position (for example, at the center portion of the tape), it becomes very convenient for the user to use the handy-type copying device.

In view of the above problems of the conventional devices, it is an object of the present invention to provide an inexpensive copying machine which is capable of easily copying only one desired character string from a plurality of character strings at a desired position without disturbing the alignment of the character string.

According to the present invention there is provided a copying device comprising window means for defining a maximum range of copying area, reading means for reading the image falling within the window, the reading means having a plurality of reading elements aligned in a predetermined direction, driving means for driving the reading means such that the reading means reciprocates with forward and backward movements in directions perpendicular to the predetermined direction, and printing means for printing the image read by the reading means on a printing medium while feeding the printing medium to pass through the printing means. Control means controls the printing means to carry out printing of the image while feeding the information of the object to be copied in the column direction as the object is read by the reading means.

In use, the copying device is placed on the object, and the window means is held against a surface of an object to be copied while visually observing the object through the window means. The image is printed on a printing medium in the form of an elongated, web-like medium by the printing means, and the printed print medium is discharged out of the copying device. In this case, the user sets a bottom side of the window means at a bottom side of a character string to be desired, and designates a printed position on the tape. Subsequently, the printing operation is executed. According to the above-mentioned construction, since the user can designate the printed position of the tape with respect to the bottom side of the window means, it becomes convenient for the user to use the handy-type copying device.

The particular features and advantages of the invention will become apparent from the following description of exemplary embodiments and with the accompanying drawings, in which:

FIG. 1A is a perspective view of a handy-type copying device according to a first embodiment of the present invention;

FIG. 1B is a block diagram of a control system of the handy-type copying device according to the first embodiment;

FIG. 2A is a view of gear trains used to feed a sensor of the handy-type copying device according to the first embodiment;

FIG. 2B is a view of gear trains used to print reduced and enlarged characters with the handy-type copying device according to the first embodiment;

FIG. 3 is a view showing gear trains of a handy-type copying device according to a second embodiment of the present invention;

FIG. 4A is a flow chart illustrating an operation sequence of the handy-type copying devices according to the first and second embodiments;

FIG. 4B is a table describing the steps performed in the FIG. 4A flow chart;

FIG. 4C is a view showing an arrangement of a plurality of reading elements;

FIG. 5A is a flow chart illustrating when the handy-type copying device prints an object to be copied on the center of a tape;

FIG. 5B is a table describing steps performed in the FIG. 5A flow chart;

FIG. 6A is a flow chart being continued from the flow chart shown in FIG. 5 and illustrating when the handy-type copying device prints an object to be copied on the center of a tape;

FIG. 6B is a table describing steps performed in the FIG. 6A flow chart;

FIGS. 7A1-7A3 illustrate an example of the case wherein the handy-type copying device prints an object to be copied on the center of a tape;

FIGS. 8A1-8A2 illustrate another example of the case wherein the handy-type copying device prints an object to be copied on the center of a tape;

FIG. 9A is a flow chart illustrating when the handy-type copying device prints a longitudinal enlarged object to be copied on the center of a tape;

FIG. 9B is a table describing steps performed in the FIG. 9A flow chart;

FIGS. 10A1-10A2 illustrate an example of the case wherein the handy-type copying device prints a longitudinal enlarged object to be copied on the center of a tape;

FIGS. 11A and 11C are a flow chart illustrating when the handy-type copying device prints a longitudinal reduced object to be copied on the center of a tape;

FIG. 11B is a table describing steps performed in the FIGS. 11A and 11C flow chart;

FIGS. 12A1-12A2 illustrate an example of the case that the handy-type copying device prints a longitudinal reduced object to be copied on the center of a tape;

FIG. 13 is a flow chart illustrating another operation sequence of the handy-type copying devices according to the first and second embodiments;

FIG. 14A is a view of character strings printed in reverse;

FIG. 14B is a view showing equal blank areas before and behind a printed character string on a tape;

FIG. 15 is a view showing gear trains of a handy-type copying device according to a third embodiment of the present invention;

FIGS. 16A and 16B show characters of reduced size;

FIG. 17 is a view showing an example of a label of a diskette; and

FIG. 18 is a view showing an example of the case wherein the conventional handy-type copying device prints an object to be copied on the center of a tape.

Hereinafter, the present invention will be explained with reference to embodiments shown in the figures. First, a mechanical construction of a handy-type copying device of the present invention will be explained.

The expressions "front", "rear", "upper", "lower" "right" and "left" are used throughout the description to define the various parts when the handy-type copying device of the present invention is disposed in an orientation in which it is intended to be used.

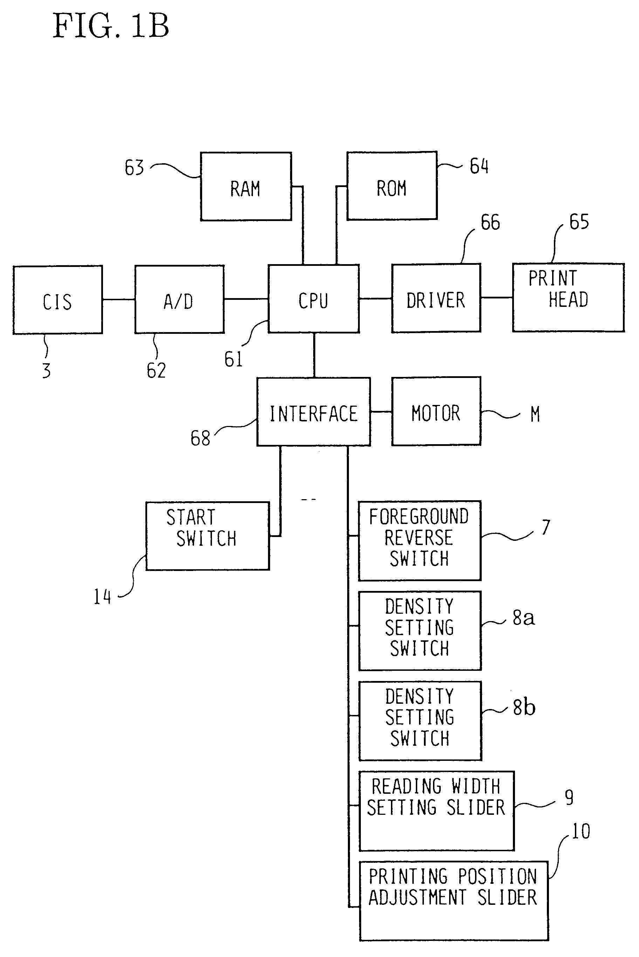

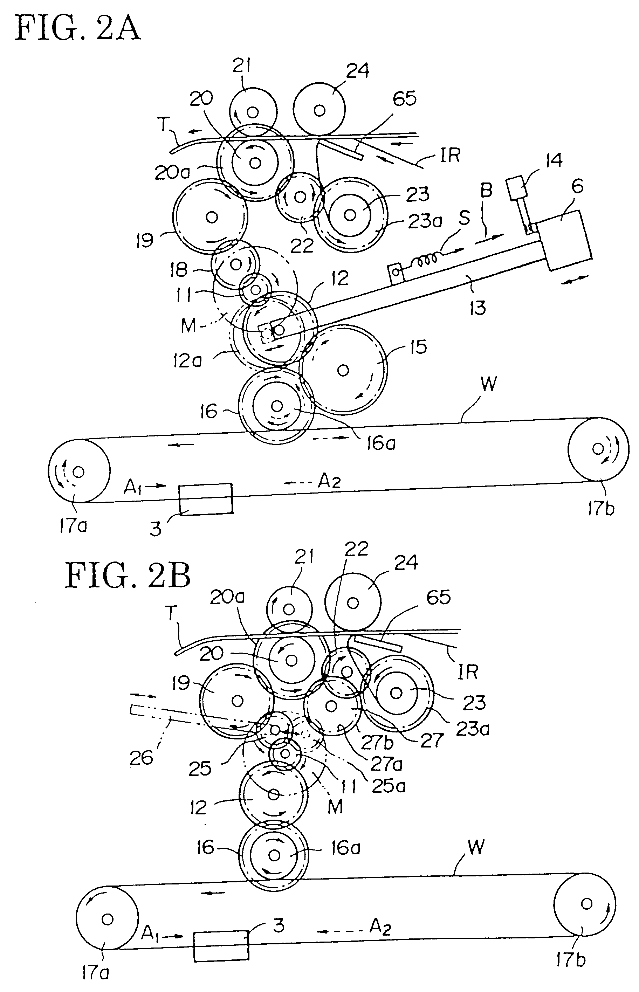

A first embodiment of the present invention will be described with reference to FIGS. 1A, 1B, 2A and 2B.

As shown in Fig. 1A, a handy-type copying device HC of the present invention has a housing 1 which is L-shaped as viewed in side elevation. The housing 1 has an elongated rectangular-shape reading window 2 defined in a lower surface thereof. A sensor 3 is housed in the housing 1 to be laterally movable above and along the reading window 2 in the directions indicated by arrows $A_1$, $A_2$. A viewfinder 4 made of a transparent material is disposed on a front portion of the housing 1. Through the viewfinder 4, the user can recognize a printed character string R on a printed document 5 held against the lower surface of the housing 1. A start button 6 is disposed on an upper surface of the housing 1. During a time when the start button 6 is depressed, the sensor 3 moves in the direction indicated by the arrow $A_1$ from a home position to read the character string R. When the start button 6 is released, the sensor 3 moves in the direction indicated by the arrow $A_2$ back to the home position, and then a drive motor is de-energized after elapse of a predetermined period of time from the release of the start button 6. The housing 1 supports, on its righthand front wall, a foreground reverse switch 7 for reversing foreground print characters from white to black or vice versa, and density setting switches 8a, 8b for setting a white-and-black reverse reference level depending on the image density of an object to be read. A reading width setting slider 9 is positioned below the switches 7, 8a, 8b for setting a range of height of the characters to be read.

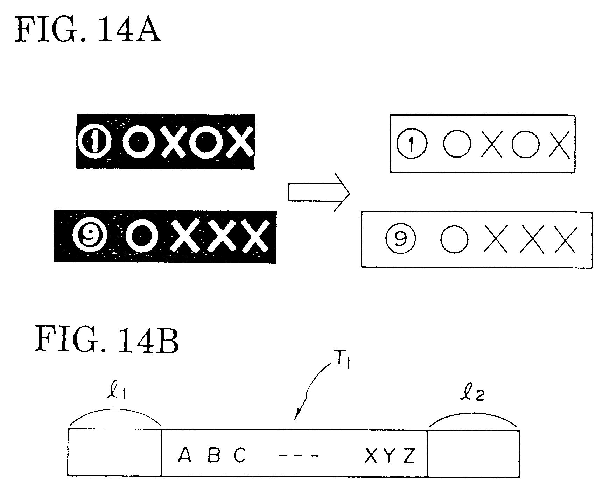

As shown in FIG. 1B, a control system of the handy-type copying device HC includes a central processing unit (CPU) 61 for governing the device HC in its entirety in accordance with a program stored in a read-only memory (ROM) 64. The sensor 3 is composed of 64 contact image sensors (CISs) aligned in a direction perpendicular to the longitudinal direction of the reading window 2. Each CIS is connected to the CPU 61 through an analog-to-digital (A/D) converter 62 for converting an analog signal into a digital signal ranging in decimal notation from 0 to 255. A random access memory (RAM) 63 is connected to the CPU 61 for temporarily storing data read by the sensor 3. A driver 66 for driving a print head 65 is also connected to the CPU 61. A start switch 14 is turned on and off by operation of the start button 6, a motor M, and various switches including the reverse switch 7, the density setting switches 8a, 8b and the reading width setting slider 9 are further connected to the CPU 61 through an interface 68. The foreground reverse switch 7 is used for commanding that white characters in a black background are converted into black characters in a white background as shown in FIG. 14A.

Lateral movement of the sensor 3 and feeding of a tape T will be described with reference to FIGS. 2A and 2B. FIG. 2A mainly shows gear trains used to move the sensor laterally, and FIG. 2B mainly shows gear trains used to print reduced and enlarged characters on the tape T. In both cases, the sensor 3 and the tape T are driven by the same motor M.

As shown in FIG. 2A, the motor M has an output gear 11 meshingly engaging a selector gear 12 mounted on an end of a lever 13 with the start button 6 attached to the other end thereof. The lever 13 is normally urged in the direction indicated by arrow B by virtue of a spring S. The selector gear 12 is normally held in meshing engagement with an idle gear 15. When the start button 6 is depressed, the selector gear 12 is shifted out of mesh with the idle gear 15 into a position 12a in which it meshingly engages a wire drive gear 16 having a pulley 16a around which there is trained a wire W that is also trained around and extends between two pulleys 17a, 17b. The sensor 3 is coupled to the wire W.

The output gear 11 meshingly engages a large-diameter gear 19 through a small-diameter gear 18, and the large-diameter gear 19 meshingly engages a gear 20a fixed to a tape feed roller 20. An auxiliary roller 21 for pressing the tape T is disposed upwardly of the tape feed roller 20 which is held in meshing engagement with an idle gear 22 meshing with a gear 23a fixedly secured to a takeup shaft 23 for winding an ink ribbon IR. The ink ribbon IR is supplied from an ink ribbon supply (not shown). The print head 65 and a platen roller 24 are disposed above the takeup shaft 23. The ink ribbon IR is superposed on the tape T and passes between the print head 65 and the platen roller 24.

In operation, when the start button 6 is depressed by the user, the switch 14 is turned on, thereby energizing the motor M to rotate the output gear 11 clockwise. On the other hand, the selector gear 12 is moved into the position 12a attendant to the depression of the start button 6, causing the wire drive gear 16 to rotate clockwise with the meshing engagement of the selector gear 12 with the wire drive gear 16. The wire W and the sensor 3 are thus moved in the direction indicated by the arrow $A_1$.

When the sensor 3 has read the character string R over a predetermined length while the user is visually observing the character string R through the viewfinder 4 (see FIG. 1), the user releases the start button 6, whereby the switch 14 is turned off. The control system is programmed so as to continuously energize the motor M for a predetermined period of time after the switch 14 is turned off. When the start button 6 is released, the selector gear 12 is shifted out of mesh with the wire drive gear 16 and brought into mesh with the idle gear 15 which then rotates the wire drive gear 16 counterclockwise. With the counterclockwise rotation of the wire drive gear 16, the wire W and the sensor 3 coupled thereto are moved in the direction indicated by the arrow $A_2$ and the sensor 3 is brought back to its home position.

Irrespective of whether the start button 6 is depressed or not, the clockwise rotation of the output gear 11 causes the idle gears 18, 19 to rotate the gear 20a counterclockwise to leftwardly feed the tape T, and also causes the idle gear 22 to rotate the gear 23a counterclockwise to wind the ink ribbon IR on the takeup shaft 23. The gear ratios of these gears 20a, 22, 23a are selected so that the tape T and the ink ribbon IR are fed at synchronized speeds. The speed at which the sensor 3 is driven in the direction $A_1$ is equal to the speed at which the tape T is fed so that an equi-magnification copy can be produced.

Printing of "reduced characters" or "enlarged characters" will be described with reference to FIG. 2B. Those parts described with reference to FIG. 2A which are not related to printing of "reduced characters" or "enlarged characters" are omitted in FIG. 2B for the sake of brevity.

As shown in FIG. 2B, a selector gear 25 is in meshing engagement with the output gear 11. The selector gear 25 is normally held in meshing engagement with the idle gear 19. The selector gear 25 is rotatably mounted on one end of a lever 26. When the lever 26 is pressed, the selector gear 25 is moved into a position 25a in which the gear 26 is brought in meshing engagement with a first gear 27a. The first gear 27a is coaxially fixed to a second gear 27b whose number of teeth is smaller than the number of teeth of the first gear 27a. The second gear 27b is held in meshing engagement with the gear 20a. The gears 20a, 23 rotate at a lower speed when the lever 26 is pressed with a selection of a gear train consisting of gears 11, 25, 27a, 27b, 20a, 22, 23a than when the lever 26 is retracted to a position in which a gear train consisting of gears 11, 25, 19, 20a, 22, 23a is selected.

When the lever 26 is pressed, the gears 20a, 23 rotate at the lower speed, and characters are printed on the tape T in a laterally reduced size. The gear ratio of the gears 19, 27 may be varied to print characters on the tape T in a laterally enlarged size.

As shown in FIGS. 2A and 2B, since the sensor 3 and the tape T are synchronously fed by the single motor M, the rotational speed of the motor M is not required to be highly accurate, and the motor M used may be relatively inexpensive.

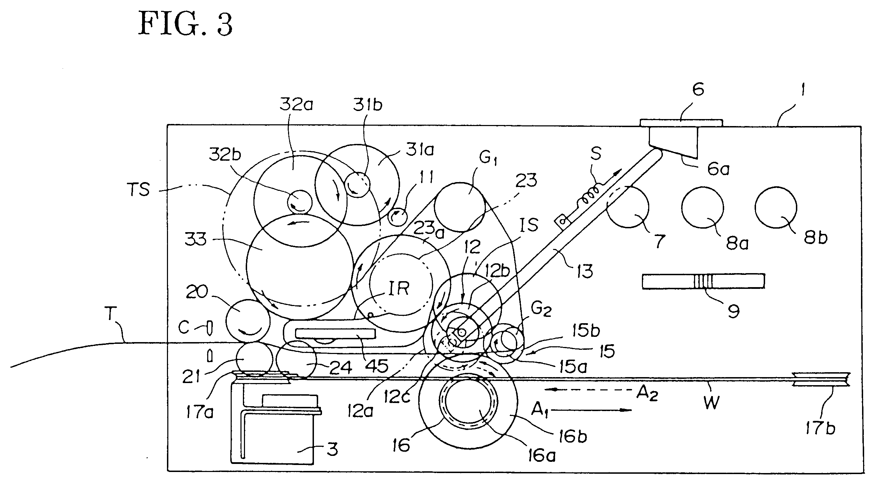

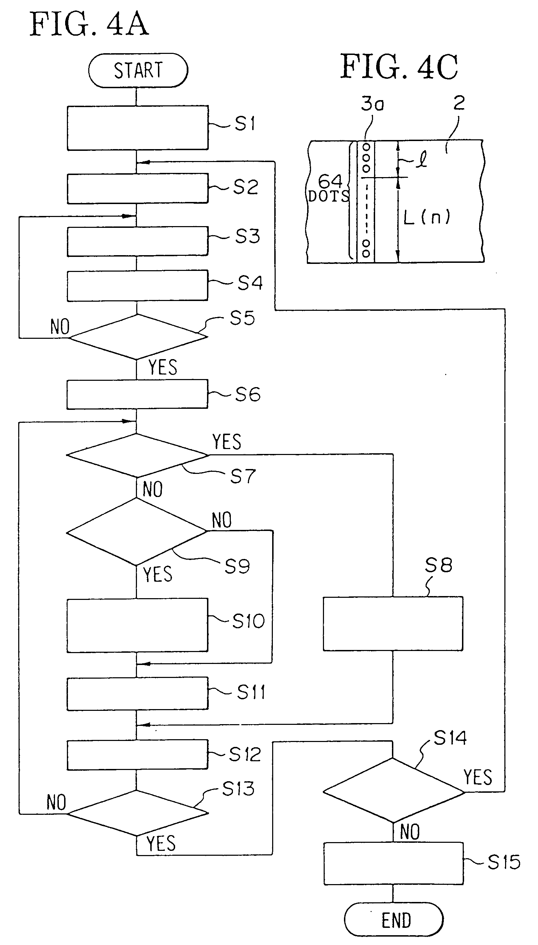

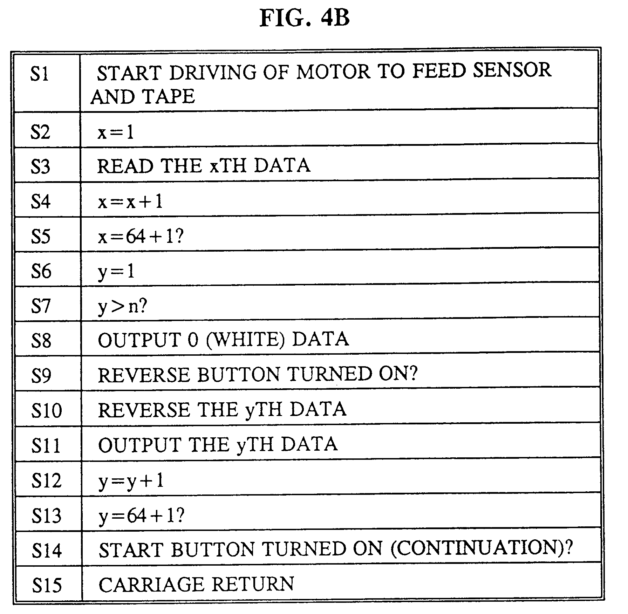

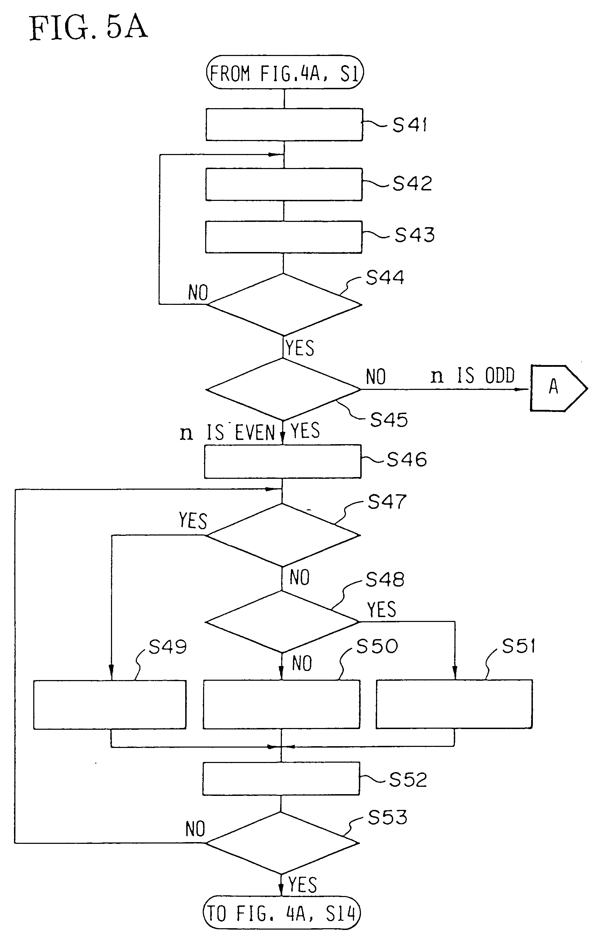

A second embodiment of the present invention will next be described with reference to FIGS. 3, 4A and 4B. An external structure and a control system of the second embodiment are identical to those shown in FIGS. 1A and 1B.

As shown in FIG. 3, the output gear 11 of the motor M is held in meshing engagement with a large-diameter gear 31a coaxially fixed to a small-diameter gear 31b which is in turn held in meshing engagement with a large-diameter gear 32a coaxially fixed to a small-diameter gear 32b. The small-diameter gear 32b meshingly engages a large-diameter gear 33. The large-diameter gear 33 is held in meshing engagement with both the tape feed roller 20 and the gear 23a fixed to the takeup shaft 23 for winding the ink ribbon IR. The gear 23a is held in meshing engagement with a large-diameter gear 12b of a selector gear 12 which also has a small-diameter gear 12c coaxial with the large-diameter gear 12b. An idle gear 15 has a small-diameter gear 15a and a large-diameter gear 15b which are coaxial with each other. The large-diameter gear 12b of the selector gear 12 meshingly engages the small-diameter gear 15a.

The lever 13 has an upper end held against a slanted surface 6a of a depresser member formed on the start button 6. The tape T is fed from a tape supply reel TS to a print head 45 and the tape feed roller 20 through guide shafts $G_1$, $G_2$. The ink ribbon IR is fed from an ink ribbon supply reel IS to the takeup shaft 23 through the print head 45.

A copying operation (General Mode) by the handy-type copying device HC according to the second embodiment will be described with reference primarily to FIGS. 4A and 4B.

The copying device HC is placed on a printed document 5 so that a desired character string R (e.g., "ABC ") thereon falls within a range defined by the reading window 2 as shown in FIG. 1A. Then, the start button 6 is depressed to energize the motor M, starting the feed of the sensor 3 and the tape T (step S1) with the meshing engagement of the small-diameter gear 12c of the selector gear with the gear 16b.

The CPU 61 sets a variable x to be 1 (step S2). The variable x shows a reading element 3a of the sensor 3. Next, the reading element 3a of the sensor 3 reads the lowest order dot shown in FIG. 4B (step S3). The CPU 61 increases the variable x (+1) (step S4), and sets a reading object of the sensor 3 as a next reading element (step S4). The CPU 61 repeats the above-mentioned operation until the sensor 3 has sixty-four reading elements (step S3-S5). The CPU 61 sets a variable y to be 1 and sets an output object to be the lowest order dot (step S6). If the output object y is more than n reading elements for printing the range of copying area (step S7; Yes), the CPU 61 outputs 0 (white) data in order to print (step S8). The CPU 61 increases the output object y (+1), and repeats this operation until the output object y reaches 64+1 (step S6→S8→S13; No). Then, the sensor 3 has sixty-four reading elements aligned in a longitudinal direction. The reading width L (dot number n) can be varied by sliding the reading width setting slider 9 as shown in FIG. 4C. A one-dot signal output from the sensor 3 is digitized by the associated A/D converter 62 to be from 0 to 255. The CPU 61 compares the digitized signal with a value determined by a reading sensibility setting switch, and converts the digitized signal into a binary signal.

Moreover, when the output object y is not more than n reading elements for printing the range of copying area in step S7, it is determined whether the reverse button is turned on or off. If turned on (step S9; Yes), the yth data is reversed. The CPU 61 outputs the yth data and prints it (step S11). If turned off (step S9; No), the CPU 61 outputs the yth data and prints the object to be copied based on the data (step S11). After Step S11, the CPU 61 increases the output object y (+1) (step S12), and repeats this operation until the output object y exceeds 64 (step S13).

If the output object y exceeds 64 (step S13; Yes), it is determined whether the start button 6 is turned on or off (that is, it is determined whether a continuation copy operation is commanded). If turned on (step S14; Yes), the CPU 61 returns to step S2 and repeats processing of steps S1~S13. If the start button 6 is not turned on in step S14 (step S14; No), a carriage return operation is executed, so that, one line printing is completed (step S15).

In the above-mentioned step S2~S13, only a vertical array of dots of the character string R is read and printed. Therefore, the storage capacity of the RAM 63 for storing data of the read dots may be relatively small, with a resultant reduction in the cost of the handy-type copying device.

If the start button 6 is not turned on in step S14, then the motor M remains energized for a predetermined period of time (step S12). More specifically, when the start button 6 is released, the process of reading the desired character string R (FIG. 1A) is completed. The lever 13 is pulled upwardly under the bias of a spring S, thereby shifting the selector gear 12 into mesh with the idle gear 15a to rotate the wire drive gear 16 clockwise. In accordance with the clockwise rotation of the wire drive gear 16, the sensor 3 moves in the direction $A_2$ back to the home position. As shown in FIG. 14B, the CPU 61 is programmed so as to preserve equal blank areas $\ell_1$, $\ell_2$ on the tape $T_1$ at left and right sides thereof when printing the character string thereon. A cutter C (see FIG. 3) is positioned to cut those blank areas off the portion of the printed tape which contains the printed character string.

Though the motor is energized to rotate in one direction, the sensor 3 can be moved in both directions, i.e., fed and returned. While the sensor 3 is being returned, the tape T is fed, producing a waste tape length where no data is printed. To minimize the waste length, the gear ratio of the gears 12, 15b is varied to return the sensor 3 at an increased speed. Since the time required for the sensor 3 to return to the home position is shortened, the time in which any waste tape length is fed is also reduced.

Next, a mode for executing a particular processing of the present invention will be explained. This mode is reached from the above-mentioned General Mode by an actuation of a hand-powered switch.

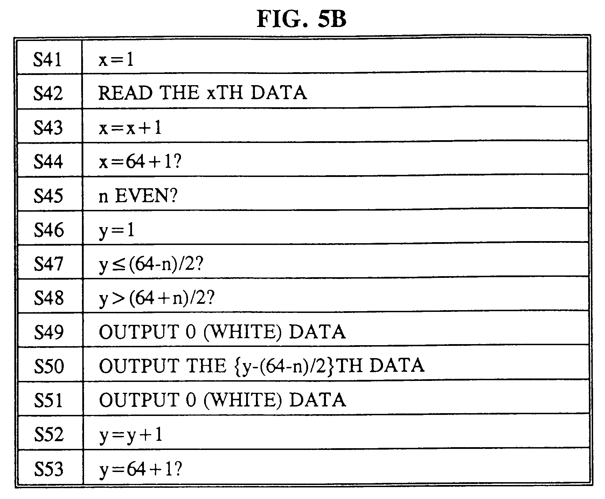

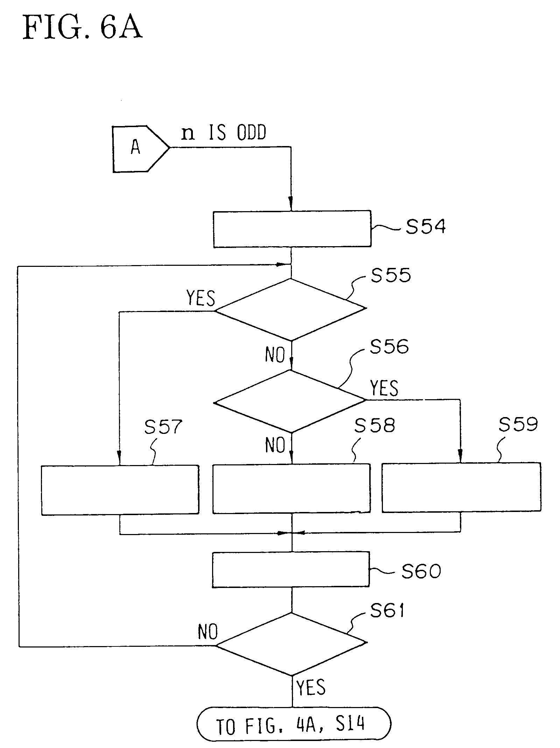

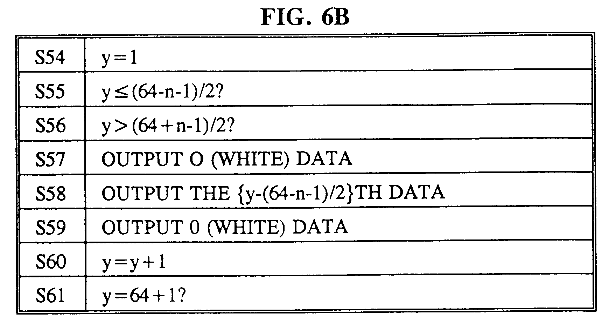

FIG. 5A and FIG. 6A show flow charts which are used for solving the problems mentioned in FIG. 18. The flow charts replace step S2 through step S13 of FIG. 4A.

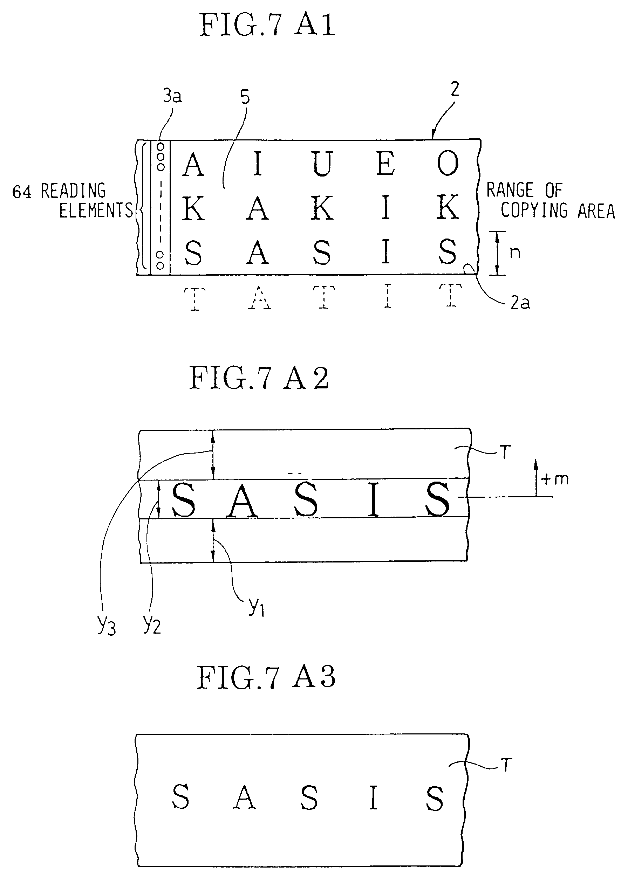

FIGS. 7A1-7A3 show a concrete illustration of printed character strings and the printing. As shown in FIG. 7A1, a printed document 5 is printed in a following operation. Besides, "TATIT" in the figure is shown in a dotted line in order to show that this character string is not visually recognized through the elongated rectangular-shaped reading window 2.

"AIUEO"

"KAKIK".

"SASIS"

"TATIT"

The case in which only one character string "SASIS" is printed will be explained.

First, the user sets the bottom side 2a of the reading window 2 at the bottom side of a character string "SASIS" in the printed document 5, as a standard side. Subsequently, the user sets a printing position adjustment lug 10 (see FIG. 1) so as to correspond to twenty-two reading elements.

When the start button 6 (see FIG. 1) is depressed, the reading element 3a reads the lowest data (step S41, S42). The CPU 61 increases the variable x ($+1$) (step S43), and repeats this operation until the sensor 3 has sixty-four reading elements (step S41~S44). If n reading elements for printing the range of copying area is an even number (for instance, twenty-two reading elements, see FIG. 7A1), the CPU 61 sets an output object y to be 1 (step S46), and calculates a functional equation shown in S47.

If the CPU 61 determines Yes in step S47, the CPU 61 outputs 0 (white) data (step S49). The CPU 61 increases the output object y ($+1$), and repeats this operation until the CPU 61 determines No in step S47 {now, since n reading elements is twenty-two, $y \leq (64-22)/2 = 21$, that is, $y = 22$}. Then, the range of reference numeral $y_1$ shown in FIG. 7A2 becomes a white background.

Next, when the output object y is more than twenty-two, the CPU 61 determines No in step S47. When the CPU 61 judges No in step S48 (now $n = 22$), {$y-(64-n)/2$}th data read by a printing head 65 is output (step S50), the CPU 61 repeats this operation until $y > (64+22)/2$ is 43. Then, the range of reference numeral $y_2$ shown in FIG. 7A2 is printed.

If the CPU 61 determines No in step S47 and determines Yes in step S48, the CPU 61 outputs 0 (white) data (step S51). Then, the range of reference numeral $y_3$ shown in FIG. 7A3 becomes a white background.

If n reading elements for printing the range of copying area is an odd number (for instance, $n = 21$) in step S45, the CPU 61 sets a variable y showing an output object to be 1 (step S54), and calculates a functional equation shown in step S55.

A functional equation shown in step S55 is made by replacing n of the functional equation shown in step S47 with $n+1$. A functional equation shown in S56 is made by replacing n of the functional equation shown in step S48 with n-1. A functional equation shown in S58 is made by replacing n of the functional equation shown in step S50 with $n+1$.

If the CPU 61 determines Yes in step S55, the CPU 61 outputs 0 (white) data (step S57). The CPU 61 increases the output object y ($+1$), and repeats this operation until the CPU 61 determines No in step S55. Then, the range of reference numeral $y_1$ shown in FIG. 7A2 becomes a white background.

Next, when the determination of step S55 has a negative result, i.e., an output object y is more than twenty-one, the CPU 61 determines No in step S56. When the CPU 61 determines No in step S56 (now $n = 21$), {$y-(64-n-1)/2$}th data read by the printing head 65 is output (step S58), the CPU 61 repeats this operation until $y > (64+21-1)/2$ is 42. Then, the range of reference numeral $y_2$ shown in FIG. 7A2 is printed.

If the CPU 61 determines No in step S55 and determines Yes in step S56, the CPU 61 outputs 0 (white) data (step S59).

Then, the range of reference numeral $y_3$ shown in FIG. 7A2 becomes a white background.

Thus, as shown in FIG. 7A3, the "SASIS" can be printed on a center of the tape T. As shown in FIG. 7A1, the handy-type copying device can automatically print the "SASIS" on a center of the tape T by setting the bottom side 2a of the reading window 2 at the bottom edge of a character string "SASIS" and setting a printing position adjustment lug 10 at the center position.

Moreover, as shown by reference numeral m in FIG. 7A2, when the handy-type copying device prints an object to be copied on m dots above position from the center of the tape T, the functional equations of step S5 and S6 in FIG. 5A and FIG. 6A are as follows:

Step S47→$y \leq \{(64-n)/2\} + m$
Step S48→$y > \{(64+n)/2\} + m$
Step S55←$y \leq \{(64-n-1)/2\} + m$
Step S56→$y > \{(64+n-1)/2\} + m$

If there are a plurality of positions where the printing position adjustment slider 10 is set, the handy-type copying device can print an object to be copied on a desired position of the tape T by adjusting the position of the printing position adjustment slider 10 (see FIG. 1). For instance, each position of the printing position adjustment slider 10 corresponds to a plurality of printing positions by setting $m = -3, -2, -1, 0, 1, 2, 3.....$, respectively.

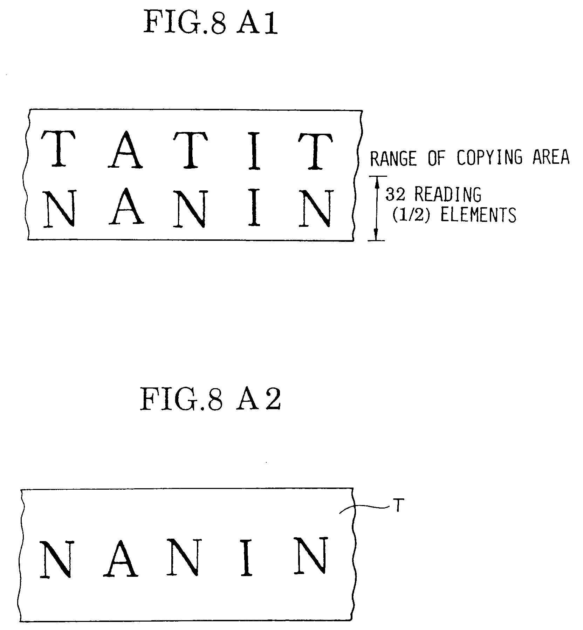

When n reading elements for printing the range of copying area is thirty-two, an image of the lowest string in FIG. 8A1 can be printed on a center of the tape T as shown in FIG. 8A2 according to the processing of the flow chart in FIG. 5A.

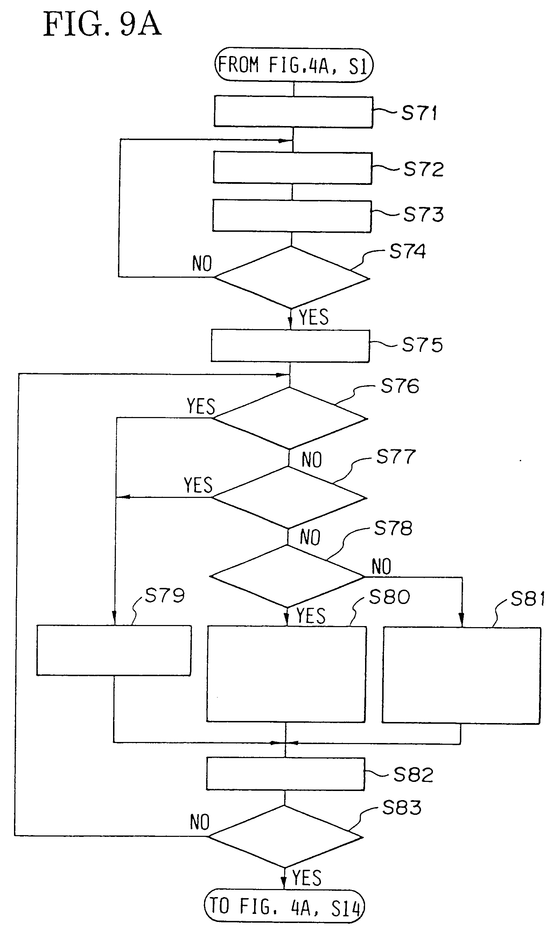

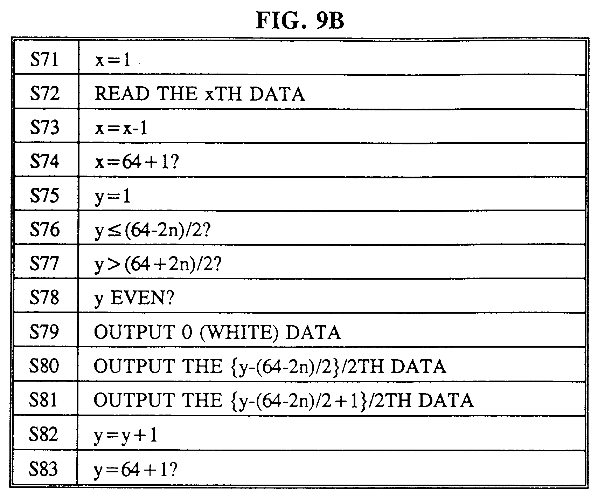

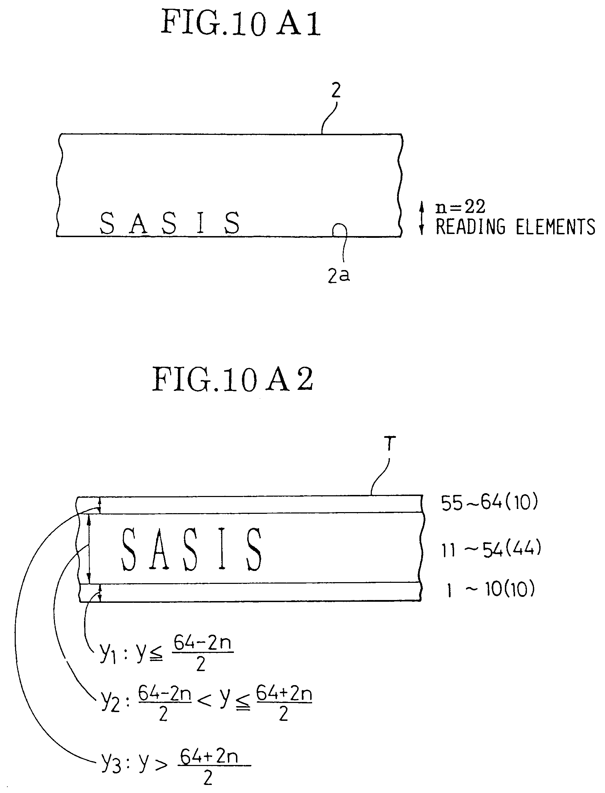

If the CPU 61 executes the processing shown in FIG. 9A, as shown in FIG. 10A1 and FIG. 10A2, the handy-type copying device can print so as to longitudinally enlarge the characters "SASIS" in a double. The handy-type copying device can perform this print operation if the handy-type copying device sets two adjoining dots aligned in a longitudinal direction for one dot of the reading data (step S78, S80, S81). Since other processings are similar to those previously mentioned with respect to FIG. 5A, an illustration of those processings is omitted. Besides, in this instance, n is twenty-two in order to print an object to be copied on a center of the tape T.

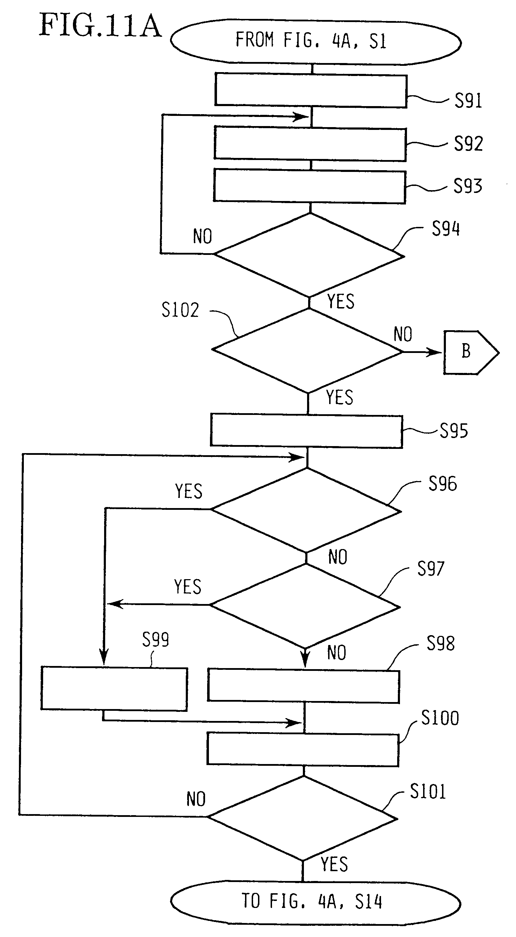

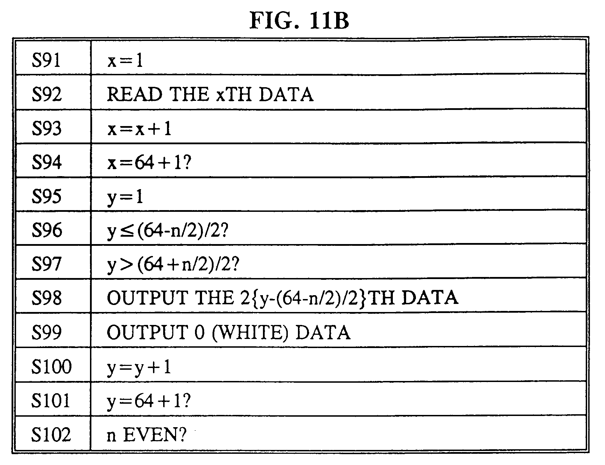

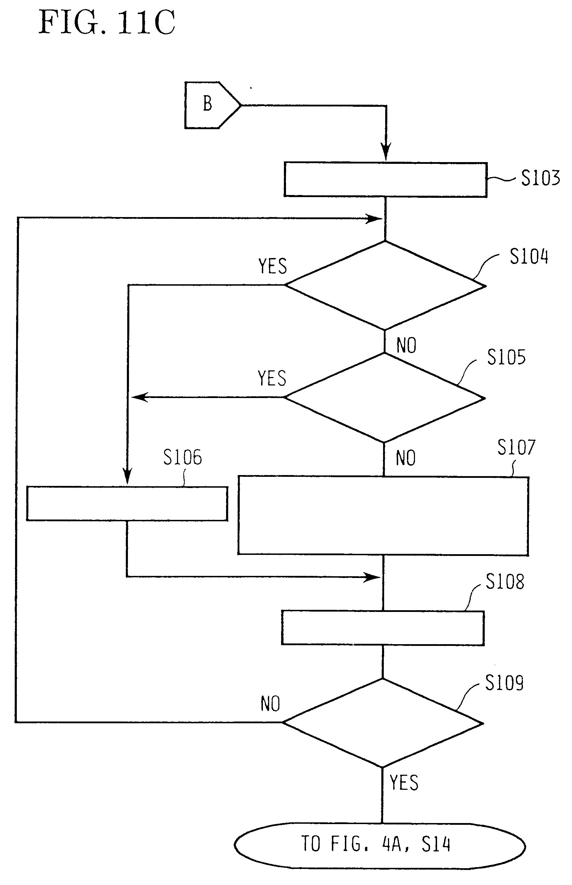

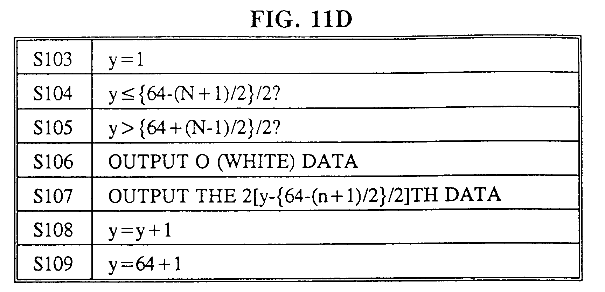

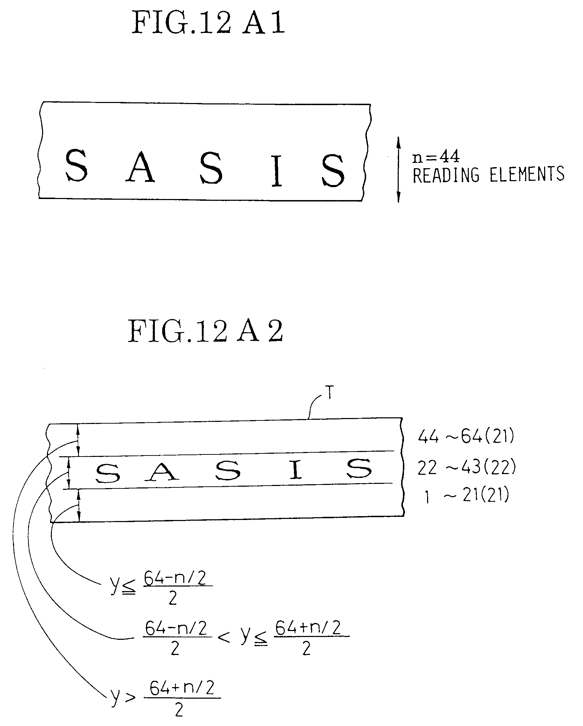

Further, if the CPU 61 executes the processing shown in FIGS. 11A and 11c, as shown in FIG. 12A1 and FIG. 12A2, the handy-type copying device can print so as to longitudinally reduce the characters "SASIS" in half. In this instance, n is forty-four in order to print an object to be copied on a center of the tape T.

The handy-type copying device can perform this print operation if the handy-type copying device sets one dot for two dots of the reading data by thinning out one dot from two adjoining dots aligned in a longitudinal direction. (If n is an even number, the processing in step S98 is executed. If n is an odd number, the processing in step S107 is executed). Since other processings are similar to those previously mentioned with respect to FIG. 6A, an illustration of those processings is omitted.

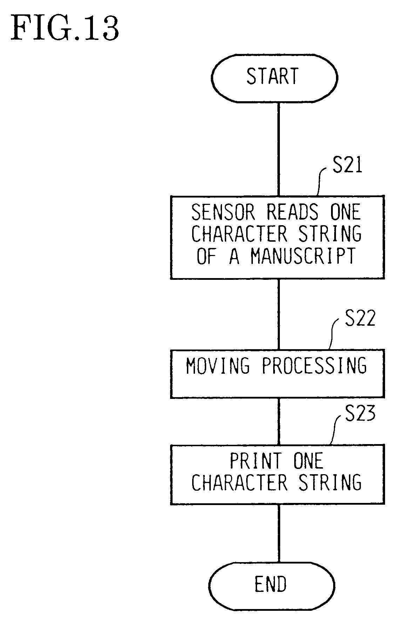

FIG. 13 shows a flow chart of a modified operation sequence of the modified handy-type copying devices. According to the modification, the sensor 3 reads all of the character string R, and the read data is stored entirely in the RAM 63. The RAM 63 is thus required to have an increased storage capacity.

More specifically, as shown in FIG. 13, the start button 6 is depressed to energize the motor M for thereby moving the sensor 3 to read the desired character string in its entirety in step S21. The read data is stored in the RAM 63. At this time, the tape T is prevented from being fed by a known clutch or the like. When the reading and storage of the data of the character string is completed, the CPU 61 executes each moving processing shown in FIG. 5A and FIG. 6A for each column, and stores the data which is made after such processing, in the RAM 63 (step S22). Subsequently, the handy-type copying device prints one character string based on the data stored in the RAM 63.

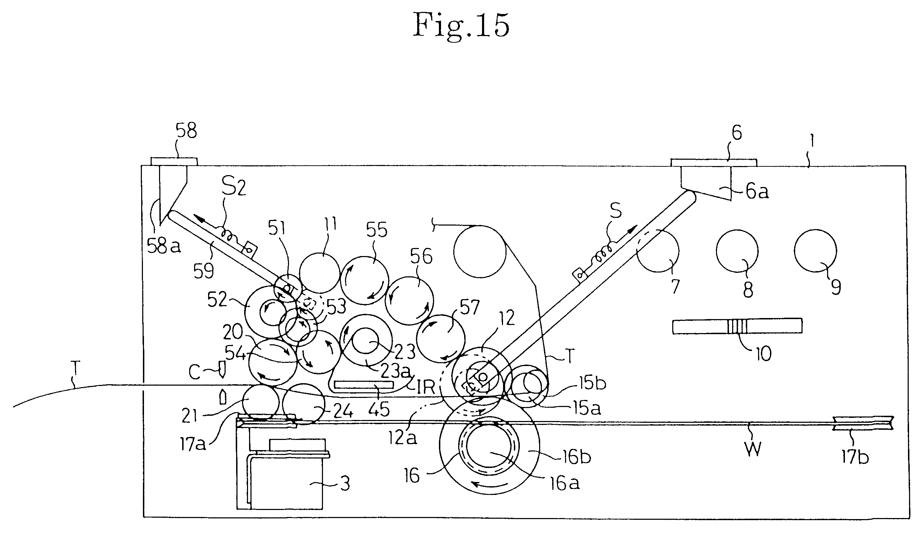

A third embodiment of the present invention will be described with reference to FIG. 15. The third embodiment is directed to a handy-type copying device for printing reduced-size characters upon reducing the width of characters to be printed.

An arrangement of gears will first be described with reference to FIG. 15. A tape supply and an ink ribbon supply are omitted from illustration in FIG. 15. As shown in FIG. 15, the output gear 11 of the motor M meshingly engages an idle gear 52 through a selector gear 51. The selector gear 51 is rotatably mounted on one end of a lever 59 whose other end is held against a lower slanted surface of a depresser member 58a of a size-reduction button 58. The lever 59 is normally urged upwardly to the left by a spring $S_2$. The idle gear 52 is held in meshing engagement with the gear 20 integral with the tape feed roller (not shown). The gear 20 meshingly engages an idle gear 54 which in turn meshingly engages the gear 23a integral with the takeup shaft 23. The output gear 11 is in meshing engagement with the selector gear 12 through idle gears 55, 56, 57.

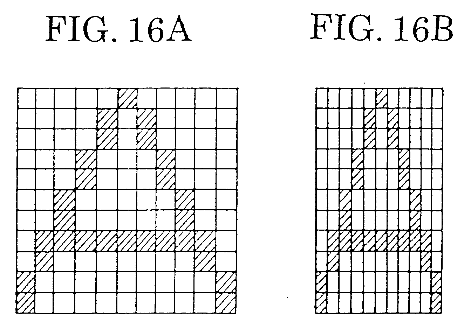

In operation, the sensor 3 is fed at a constant speed by the motor M through a gear train composed of gears 11, 55, 56, 57, 12, 16b. When the size-reduction button 58 is not depressed, a character is printed in a normal size as shown in FIG. 16A. At this time, the sensor 3 is fed through a gear train composed of gears 11, 51, 52, 20, 54, 23a. When the size-reduction button 58 is depressed, a character is printed in a laterally reduced size as shown in FIG. 16B. At this time, the sensor 3 is fed through a gear train composed of gears 11, 51, 53, 20, 54, 23a. Moreover, each gear 52 and 53 becomes a double gear by two gears with concentric shaft. According to a gear ratio between these two gears, the gear ratio of the gear 53 is lower than that of the gear 52. As can be seen from these gear trains, the character is printed in a reduced size depending on the gear ratio of the gears 52, 53.

With the present invention, as described above, the user visually observes the object to be read through the window for determining a position of the image to be copied, and the reading means is moved to read the object. Then, the data which is read by the reading means is printed. Therefore, only a line or character string desired to be copied can be printed in the same pattern as the pattern on the object, i.e., without disturbing an alignment of the pattern. Further, in the handy-type copying device, the user sets the bottom edge of the reading window at the bottom edge of a character string to be desired, and adjusts the printing position adjustment slider. Then, since the user can designate a printed position on the tape, it becomes convenient for the user to use the handy-type copying device.

It is to be understood that the present invention is not restricted to the particular forms shown in the foregoing embodiments, and various modifications and alternatives can be added thereto without departing from the scope of the invention encompassed by the appended claims.

**Claims**

**1.** A copying device comprising:

window means for defining a maximum range of copying area;

reading means having a plurality of reading elements aligned in a predetermined direction for reading an image falling within the window means;

moving means for moving the reading means in a direction crossing the predetermined direction;

printing means for printing the image read by the reading means on a printing medium; and

control means for controlling the printing means to carry out printing of the image onto a desired position on the printing medium.

A copying device according to claim 1, wherein said control means controls the printing means such that said desired position is shifted on the printing medium in a direction crossing the moving direction of the reading means.

3. A copying device according to claim 1 or 2, wherein the predetermined direction is substantially perpendicular to a direction of a string of the image.

4. A copying device according to any one of claims 1 to 3, wherein the printing means executes the printing synchronously with the execution of reading by the reading means.

5. A copying device according to any one of claims 1 to 4, further comprising a start button for starting a copying operation, wherein said reading means moves forwardly from a home position during a time when said start button is being depressed and said reading means returns to the home position when said start button is released.

6. A copying device according to claim 1, 2 or 3, further comprising feeding means for feeding the printing medium to pass through the printing means when the printing means executes the printing.

7. A copying device according to claim 6, wherein said feeding means comprises a roller member rotatable about an axis thereof for feeding said print medium, and drive means operatively connected to said roller member for rotating said roller member.

8. A copying device according to claim 7, further comprising supplying means for supplying said print medium, said print medium being in the form of an elongated, web-like medium.

9. A copying device according to claim 7 or 8, wherein said drive means comprises a motor and a first transmission mechanism operatively coupled between said motor and said roller member.

10. A copying device according to claim 9, further comprising switching means connected to said motor, said switch means being switched on when a start button is depressed to thereby energize said motor.

11. A copying device according to claim 10, further comprising a second transmission mechanism having an input and an output, said input of said second transmission mechanism being operatively coupled to said motor when said start button is depressed, and a third transmission mechanism having an input and an output, said input of said third transmission mechanism being operatively coupled to said motor when said start button is released, wherein said reading means is selectively coupled to said outputs of said second and third transmission mechanisms, and wherein said reading means is forwardly moved when coupled to said second transmission mechanism and is backwardly moved when coupled to said third transmission mechanism.

12. A copying device according to any one of claims 6 to 11, wherein said printing medium is fed by said feeding means at a speed substantially equal to a moving speed at which said reading means is forwardly moved, whereby an equal magnification image is printed on said printing medium.

13. A copying device according to any one of claims 6 to 11, wherein said printing medium is fed by said feeding means at a speed different from a moving speed at which said reading means is forwardly moved, whereby one of a reduced-size and an enlarged-size image is printed on said printing medium.

14. A copying device according to any one of claims 9 to 13, further comprising ink ribbon supplying means for supplying an ink ribbon, and ink ribbon take-up means rotatable about an axis thereof for taking up said ink ribbon.

15. A copying device according to claim 14, further comprising an additional transmission mechanism operatively coupled between said motor and said ink ribbon take-up means for rotating said ink ribbon take-up means to wind said ink ribbon about said axis.

16. A copying device according to claim 15, wherein said ink ribbon is wound at a speed equal to a speed at which said printing medium is fed.

## FIG.1A

FIG. 1B

# FIG. 2A

# FIG. 2B

# FIG. 3

EP 0 527 573 A2

FIG. 4A

FIG. 4C

START

S1

S2

S3

S4

NO — S5 — YES

S6

YES — S7 — NO

NO — S9 — YES

S10

S8

S11

S12

S13 — YES — NO

S14 — YES — NO

S15

END

3a

2

64 DOTS

$\ell$

L(n)

14

# FIG. 4B

| S1 | START DRIVING OF MOTOR TO FEED SENSOR AND TAPE |
|---|---|
| S2 | $x = 1$ |
| S3 | READ THE xTH DATA |
| S4 | $x = x + 1$ |
| S5 | $x = 64 + 1$? |
| S6 | $y = 1$ |
| S7 | $y > n$? |
| S8 | OUTPUT 0 (WHITE) DATA |
| S9 | REVERSE BUTTON TURNED ON? |
| S10 | REVERSE THE yTH DATA |
| S11 | OUTPUT THE yTH DATA |
| S12 | $y = y + 1$ |
| S13 | $y = 64 + 1$? |
| S14 | START BUTTON TURNED ON (CONTINUATION)? |
| S15 | CARRIAGE RETURN |

# FIG. 5A

```
        ( FROM FIG.4A, S1 )
                │
        ┌───────────────┐
        │               │── S41
        └───────────────┘
                │
        ┌───────────────┐
        │               │── S42
        └───────────────┘
                │
        ┌───────────────┐
        │               │── S43
        └───────────────┘
                │
              ◇ S44
         NO  ╱   ╲
        ────     
              ╲   ╱
               YES
                │
              ◇           NO    n IS ODD    ┌─ A ─▷
             ╱ ╲ ─────────────────────────▷
              S45
     n IS EVEN │ YES
        ┌───────────────┐
        │               │── S46
        └───────────────┘
                │
              ◇ S47
      YES  ╱   ╲
     ─────
              ╲   ╱
               NO
              ◇ S48
             ╱   ╲  YES
              ╲   ╱ ──────────┐
               NO
  ┌────────┐  ┌────────┐  ┌────────┐
  │S49     │  │S50     │  │S51     │
  └────────┘  └────────┘  └────────┘
                │
        ┌───────────────┐
        │               │── S52
        └───────────────┘
                │
              ◇ S53
         NO  ╱   ╲
        ────
              ╲   ╱
               YES
        ( TO FIG. 4A, S14 )
```

## FIG. 5B

| S41 | x = 1 |
|-----|-------|
| S42 | READ THE xTH DATA |
| S43 | x = x + 1 |
| S44 | x = 64 + 1? |
| S45 | n EVEN? |
| S46 | y = 1 |
| S47 | y ≤ (64-n)/2? |
| S48 | y > (64+n)/2? |
| S49 | OUTPUT 0 (WHITE) DATA |
| S50 | OUTPUT THE {y-(64-n)/2}TH DATA |
| S51 | OUTPUT 0 (WHITE) DATA |
| S52 | y = y + 1 |
| S53 | y = 64 + 1? |

# FIG. 6A

## FIG. 6B

| S54 | $y = 1$ |
|-----|---------|
| S55 | $y \leq (64\text{-}n\text{-}1)/2?$ |
| S56 | $y > (64 + n\text{-}1)/2?$ |
| S57 | OUTPUT O (WHITE) DATA |
| S58 | OUTPUT THE $\{y\text{-}(64\text{-}n\text{-}1)/2\}$TH DATA |
| S59 | OUTPUT 0 (WHITE) DATA |
| S60 | $y = y + 1$ |
| S61 | $y = 64 + 1?$ |

## FIG.7 A1

## FIG.7 A 2

## FIG.7 A 3

20

## FIG.8 A1

T A T I T
N A N I N

RANGE OF COPYING AREA

32 READING
(1/2) ELEMENTS

## FIG.8 A2

N A N I N

T

FIG. 9A

## FIG. 9B

| S71 | x=1 |
|-----|-----|
| S72 | READ THE xTH DATA |
| S73 | x=x-1 |
| S74 | x=64+1? |
| S75 | y=1 |
| S76 | y ≤ (64-2n)/2? |
| S77 | y > (64+2n)/2? |
| S78 | y EVEN? |
| S79 | OUTPUT 0 (WHITE) DATA |
| S80 | OUTPUT THE {y-(64-2n)/2}/2TH DATA |
| S81 | OUTPUT THE {y-(64-2n)/2+1}/2TH DATA |
| S82 | y=y+1 |
| S83 | y=64+1? |

# FIG.10 A1

2

S A S I S

2a

$n = 22$
READING ELEMENTS

# FIG.10 A2

T

S A S I S

55~64(10)

11~54(44)

1~10(10)

$y_1 : y \leqq \dfrac{64 - 2n}{2}$

$y_2 : \dfrac{64 - 2n}{2} < y \leqq \dfrac{64 + 2n}{2}$

$y_3 : y > \dfrac{64 + 2n}{2}$

# FIG.11A

FROM FIG. 4A, S1

S91

S92

S93

S94

NO

YES

S102

NO → B

YES

S95

S96

YES

NO

S97

YES

NO

S99

S98

S100

S101

NO

YES

TO FIG. 4A, S14

## FIG. 11B

| S91 | $x = 1$ |
|-----|---------|
| S92 | READ THE xTH DATA |
| S93 | $x = x + 1$ |
| S94 | $x = 64 + 1$? |
| S95 | $y = 1$ |
| S96 | $y \leq (64-n/2)/2$? |
| S97 | $y > (64+n/2)/2$? |
| S98 | OUTPUT THE 2{y-(64-n/2)/2}TH DATA |
| S99 | OUTPUT 0 (WHITE) DATA |
| S100 | $y = y + 1$ |
| S101 | $y = 64 + 1$? |
| S102 | n EVEN? |

FIG. 11C

## FIG. 11D

| S103 | $y = 1$ |
|------|---------|
| S104 | $y \leq \{64\text{-}(N+1)/2\}/2?$ |
| S105 | $y > \{64+(N\text{-}1)/2\}/2?$ |
| S106 | OUTPUT O (WHITE) DATA |
| S107 | OUTPUT THE $2[y\text{-}\{64\text{-}(n+1)/2\}/2]$TH DATA |
| S108 | $y = y + 1$ |
| S109 | $y = 64 + 1$ |

# FIG.12 A1

$$S \quad A \quad S \quad I \quad S$$

n=44
READING ELEMENTS

# FIG.12 A 2

T

44 ~ 64 (21)

$$S \quad A \quad S \quad I \quad S$$

22 ~ 43 (22)

1 ~ 21 (21)

$$y \leqq \frac{64 - n/2}{2}$$

$$\frac{64 - n/2}{2} < y \leqq \frac{64 + n/2}{2}$$

$$y > \frac{64 + n/2}{2}$$

# FIG.13

```
              ┌──────────┐
              │  START   │
              └────┬─────┘
                   │
                   │        ┌ S21
          ┌────────┴────────────┐
          │  SENSOR READS ONE   │
          │  CHARACTER STRING   │
          │  OF A MANUSCRIPT    │
          └────────┬────────────┘
                   │        ┌ S22
          ┌────────┴────────────┐
          │  MOVING PROCESSING  │
          └────────┬────────────┘
                   │        ┌ S23
          ┌────────┴────────────┐
          │     PRINT ONE       │
          │  CHARACTER STRING   │
          └────────┬────────────┘
                   │
              ┌────┴─────┐
              │   END    │
              └──────────┘
```

# FIG. 14A

# FIG. 14B

Fig.15

EP 0 527 573 A2

# FIG. 16A

# FIG. 16B

33

# FIG. 17

```
* SOFTWARE NAME

  ABC SOFTWARE Ver. 1.0


* DISKETTE NUMBER

  19921672-01

  . . . . . . . . . . . .
```

## FIG.18 A 1

64 READING ELEMENTS (8mm)

5    2

| K | A | K | I | K |
| S | A | S | I | S |
| T | A | T | I | T |

RANGE OF COPYING AREA

22 READING ELEMENTS

## FIG.18 A 2

S A S I S

T

## FIG.18 B 1

| I | A | I | I | I |
| N | A | N | I | N |
| H | A | H | I | H |

RANGE OF COPYING AREA

32 READING (1/2) ELEMENTS

## FIG.18 B 2

N A N I N